(19) Europäisches Patentamt
European Patent Office
Office européen des brevets

(11) EP 4 579 853 A1

(12) EUROPEAN PATENT APPLICATION
published in accordance with Art. 153(4) EPC

(43) Date of publication:
02.07.2025 Bulletin 2025/27

(21) Application number: 23902113.2

(22) Date of filing: 19.07.2023

(51) International Patent Classification (IPC):
*H01M 10/0567* (2010.01) *H01M 10/0525* (2010.01)

(52) Cooperative Patent Classification (CPC):
**H01M 10/0525; H01M 10/0567;** Y02E 60/10

(86) International application number:
PCT/CN2023/108148

(87) International publication number:
WO 2024/124903 (20.06.2024 Gazette 2024/25)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(30) Priority: 16.12.2022 CN 202211621362

(71) Applicant: Suzhou Cheerchem Advanced Material Co., Ltd.
Suzhou, Jiangsu 215500 (CN)

(72) Inventors:
- FU, Renjun
  Suzhou, Jiangsu 215500 (CN)
- DONG, Bin
  Suzhou, Jiangsu 215500 (CN)
- YU, Dongqing
  Suzhou, Jiangsu 215500 (CN)

(74) Representative: Ullrich & Naumann PartG mbB
Schneidmühlstrasse 21
69115 Heidelberg (DE)

# (54) ELECTROLYTE ADDITIVE COMPOSITION OF LITHIUM-ION BATTERY, ELECTROLYTE CONTAINING ADDITIVE COMPOSITION, AND USE OF ELECTROLYTE

(57) An electrolyte additive composition of a lithium-ion battery, an electrolyte containing the additive composition, and a use of the electrolyte. The additive composition comprises an unsaturated cyclic carbonate and an unsaturated chain carbonate. The unsaturated cyclic carbonate comprises at least one of the following compounds: formula (1-a), formula (1-b), and formula (1-c); the structural general formula of the unsaturated chain carbonate is: general formula (2), wherein $R_1$ is hydrocarbyl or fluorinated hydrocarbyl containing 1 to 6 carbon atoms, $R_2$ is hydrocarbyl or fluorinated hydrocarbyl containing 1 to 6 carbon atoms, and group A is vinylidene or ethynylene. The lithium-ion battery using the electrolyte has the advantages of low impedance, excellent cycle performance and the like, and the battery has excellent high-temperature cycle performance and high-temperature storage performance.

EP 4 579 853 A1

## Description

### FIELD OF THE INVENTION

The present application relates to the field of lithium-ion batteries and, in more particular, to an additive composition for a lithium-ion battery electrolyte, an electrolyte comprising the additive composition, and a use of the electrolyte.

### BACKGROUND OF THE INVENTION

Compared with conventional secondary batteries, lithium-ion batteries have greater energy density, higher voltage, and longer cycle life. In addition, lithium-ion batteries are environmentally friendly. In view of the foregoing, lithium-ion batteries have been widely used in many fields, such as laptops, mobile phones, digital products, and electric vehicles.

An important component of the lithium-ion battery is an electrolyte, which functions to transfer lithium ions between the cathode and anode of the battery. The electrolyte usually comprises a lithium salt electrolyte, an organic solvent and an additive composition. The introduction of the additive composition can improve the rate performance and cycle life of the battery, reduce the resistance of the battery, etc. Vinylene carbonate and vinyl ethylene carbonate are common film-forming additive compositions. Vinylene carbonate and vinyl carbonate will undergo electrochemical polymerization on the surface of the anode to form a dense solid electrolyte film to prevent an electrode material from contacting the electrolyte, thereby preventing the electrolyte from further reduction and decomposing on the surface of the anode, and inhibiting side reactions between the electrolyte and the electrode material. Moreover, the solid electrolyte film may also prevent the solvent and lithium ions from being co-embedded in the electrode material.

Power batteries are power supplies for tools. Sufficient film-forming additive compositions are required to ensure that the batteries have sufficient cycle stability. However, the increase in the amount of film-forming additive compositions will increase the cost, and the resistance of the batteries will also increase accordingly, and the rate performance and low-temperature performance of the batteries will be affected by the increase in the resistance of the batteries. In addition, when the amount of additive compositions such as vinylene carbonate, increases in lithium-ion batteries using lithium nickel cobalt manganese oxides as cathode materials, the batteries may swell obviously when working at high temperatures, posing a safety hazard.

In view of the foregoing, how to develop an additive composition that causes lithium-ion batteries to have low impedance, long cycle life, and excellent high- and low-temperature performance is an important topic in the field of lithium-ion batteries.

### SUMMARY

In order to obtain lithium-ion batteries with low impedance, long cycle life and excellent high- and low-temperature performance, the present application provides an additive composition for a lithium-ion battery electrolyte, an electrolyte comprising the additive composition and a use of the electrolyte.

In a first aspect, the present application provides an additive composition for a lithium-ion batterie electrolyte and adopts the following technical solution.

An additive composition for a lithium-ion battery electrolyte, including an unsaturated cyclic carbonate and an unsaturated chain carbonate, wherein

the unsaturated cyclic carbonate includes at least one of the following compounds:

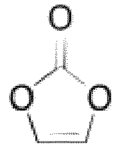

formula (1-a)

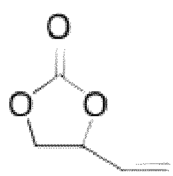

formula (1-b)

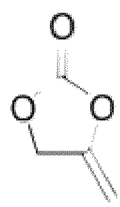

formula (1-c)

the unsaturated chain carbonate has the following general structural formula:

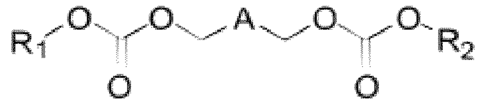

general formula (2)

wherein $R_1$ is a hydrocarbyl or fluorinated hydrocarbyl containing 1 to 6 carbon atoms, and $R_2$ is a hydrocarbyl or fluorinated hydrocarbyl containing 1 to 6 carbon atoms; and group A is a vinylidene or an ethynylene.

In a specific embodiment, the unsaturated chain carbonate is at least one of the following compounds:

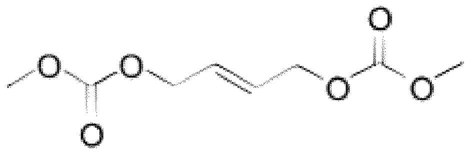

formula (2-a)

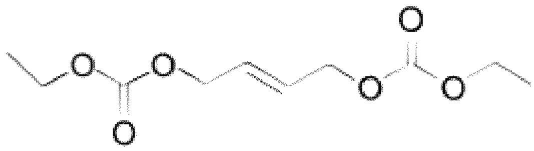

formula (2-b)

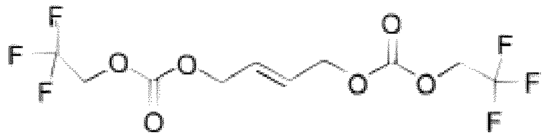

formula (2-c)

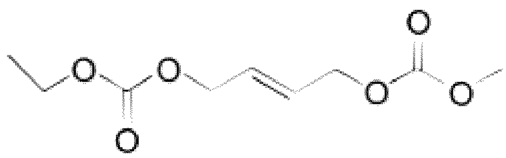

formula (2-d)

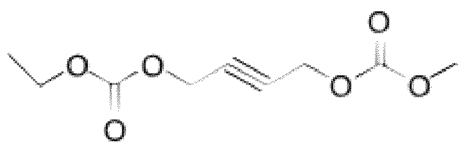

formula (2-e)

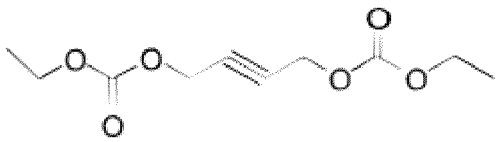

formula (2-f)

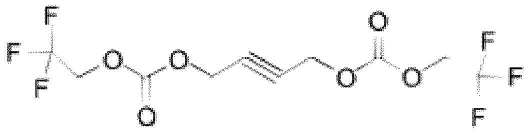

formula (2-g)

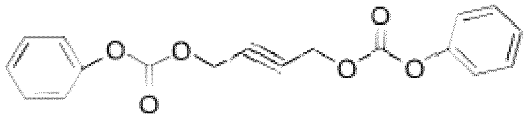

formula (2-h)

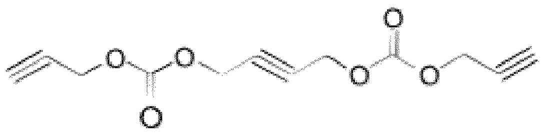

formula (2-i)

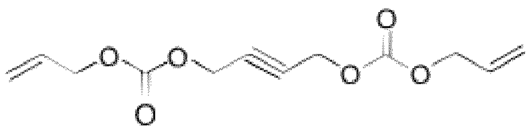

formula (2-j).

and

In a specific embodiment, a mass ratio of the unsaturated cyclic carbonate to the unsaturated chain carbonate is (0.5-5): (0.05-10).

In a second aspect, the present application provides a lithium-ion battery electrolyte and adopts the following technical solution.

A lithium-ion battery electrolyte, including a lithium salt electrolyte, an organic solvent and the additive composition.

In a specific embodiment, a mass percent of the unsaturated cyclic carbonate in the additive composition is 0.5%-5% in the lithium-ion battery electrolyte, and a mass percent of the unsaturated chain carbonate in the additive composition is 0.05%-10% in the lithium-ion battery electrolyte.

In a specific embodiment, the organic solvent is at least one selected from a group consisting of: dimethyl carbonate, diethyl carbonate, dipropyl carbonate, ethylene carbonate, ethyl methyl carbonate, methyl propyl carbonate, methyl butyl carbonate, propylene carbonate, γ-butyrolactone, methyl acetate, ethyl acetate, propyl acetate, butyl acetate, methyl propionate, ethyl propionate, propyl propionate, methyl butyrate, ethyl butyrate, difluoroethyl acetate, trifluoroethyl acetate, trifluoroethyl methyl carbonate, and bistrifluoroethyl carbonate.

In a specific embodiment, the lithium salt electrolyte is at least one selected from a group consisting of: lithium

hexafluorophosphate, lithium tetrafluoroborate, lithium difluorophosphate, lithium perchlorate, lithium hexafluoroarsenate, lithium bis(fluorosulfonyl)imide, lithium bis(trifluoromethylsulfonyl)imide, lithium bis(oxalate)borate, lithium difluorooxalateborate, lithium tetrafluorooxalatephosphate, lithium difluorobis(oxalate)phosphate, and lithium fluorosulfonyl(trifluoromethylsulfonyl)imide. A molar concentration of the electrolyte in the lithium-ion battery electrolyte is 0.5-2 mol/L.

The lithium-ion battery electrolyte of the present application is suitable for lithium-ion batteries with lithium iron phosphorus oxide, lithium manganese oxide, lithium cobalt oxide, lithium nickel cobalt manganese oxide, lithium nickel cobalt aluminum oxide, lithium manganese iron phosphorus oxide, and lithium nickel cobalt manganese aluminum oxide as cathodes.

In a specific embodiment, the lithium-ion battery electrolyte of the present application is suitable for lithium-ion batteries with carbon materials or silicon-based materials as anodes.

In summary, the present application has the following beneficial effects.

The present application uses a mixture of the unsaturated cyclic carbonate and the unsaturated chain carbonate as the additive composition for use in the lithium-ion battery electrolyte. With suitable ratios, the lithium-ion batteries with low impedance, excellent cycle performance, especially low-temperature cycle performance, are obtained; the generation of gas caused by the decomposition of the lithium-ion battery electrolyte can be inhibited, and the high-temperature cycle and high-temperature storage performance of the batteries are improved.

## DETAILED DESCRIPTION

The present application is further described in detail with reference to examples below.

EXAMPLES

An example of the present application provides a lithium-ion battery electrolyte.

A preparation method for the lithium-ion battery electrolyte includes the following steps:

Step 1, in a glove box filled with nitrogen or argon, where the water and oxygen contents are both at most 0.1 ppm, an organic solvent and a lithium salt electrolyte are evenly mixed to obtain a basic electrolyte;

Step 2, still in the glove box filled with nitrogen or argon, where the water and oxygen contents are both at most 0.1 ppm, an additive composition is added to the basic electrolyte and mixed evenly to obtain the lithium-ion battery electrolyte.

The additive composition in this example is a mixture of an unsaturated cyclic carbonate and an unsaturated chain carbonate.

The unsaturated cyclic carbonate in this example is selected from the following compounds:

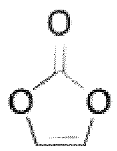

formula (1-a)

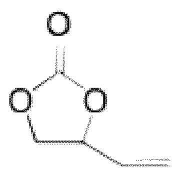

formula (1-b)

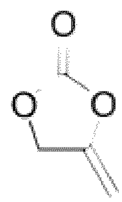

formula (1-c).

In this example, the unsaturated chain carbonate has the following general structural formula:

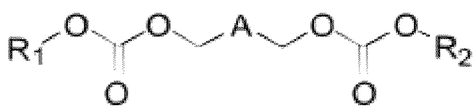

general formula (2)

wherein $R_1$ is a hydrocarbyl or fluorinated hydrocarbyl containing 1 to 6 carbon atoms, and $R_2$ is a hydrocarbyl or fluorinated hydrocarbyl containing 1 to 6 carbon atoms; and group A is a vinylidene or an ethynylene.

Specifically, the unsaturated chain carbonate in this example is selected from the following compounds:

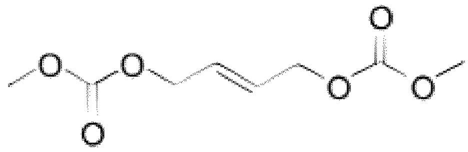

formula (2-a)

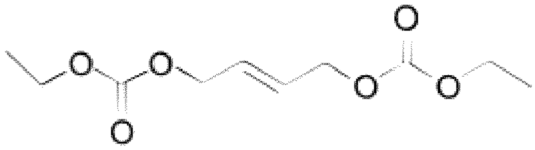

formula (2-b)

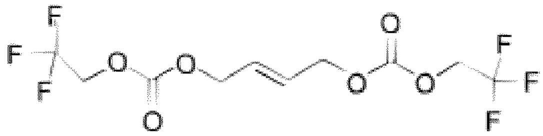

formula (2-c)

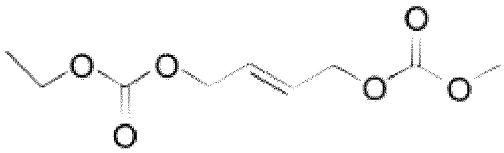

formula (2-d)

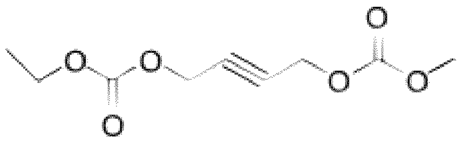

formula (2-e)

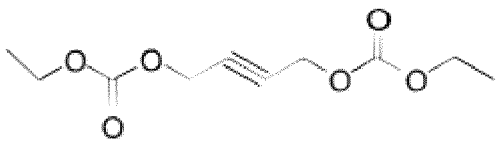

formula (2-f)

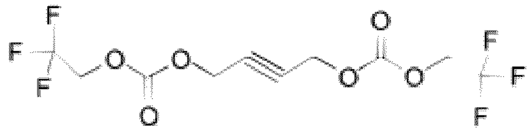

formula (2-g)

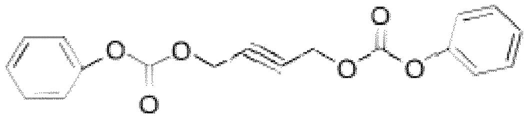

formula (2-h)

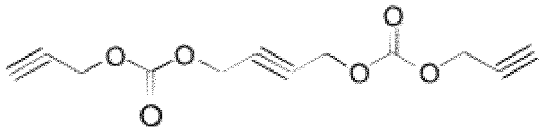

formula (2-i)

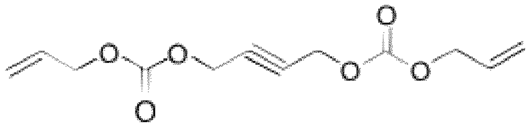

formula (2-j).

and

In a specific embodiment, the organic solvent is at least one selected from a group consisting of: dimethyl carbonate, diethyl carbonate, dipropyl carbonate, ethylene carbonate, ethyl methyl carbonate, methyl propyl carbonate, methyl butyl carbonate, propylene carbonate, γ-butyrolactone, methyl acetate, ethyl acetate, propyl acetate, butyl acetate, methyl propionate, ethyl propionate, propyl propionate, methyl butyrate, ethyl butyrate, difluoroethyl acetate, trifluoroethyl acetate, trifluoroethyl methyl carbonate, and bistrifluoroethyl carbonate.

Preferably, the organic solvent in this example is a mixture of ethylene carbonate, ethyl methyl carbonate and dimethyl carbonate; further, a volume ratio of ethylene carbonate to ethyl methyl carbonate to dimethyl carbonate is 1:1:1.

In this example, the lithium salt electrolyte is at least one selected from a group consisting of: lithium hexafluorophosphate, lithium tetrafluoroborate, lithium difluorophosphate, lithium perchlorate, lithium hexafluoroarsenate, lithium bis(fluorosulfonyl)imide, lithium bis(trifluoromethylsulfonyl)imide, lithium bis(oxalate)borate, lithium difluorooxalateborate, lithium tetrafluorooxalatephosphate, lithium difluorobis(oxalate)phosphate, and lithium fluorosulfonyl(trifluoromethylsulfonyl)imide. A molar concentration of the lithium salt electrolyte in the lithium-ion battery electrolyte is 0.5-2 mol/L.

Preferably, the lithium salt electrolyte in this example is lithium hexafluorophosphate, and the molar concentration of lithium hexafluorophosphate is 1 mol/L.

This example further provides a method for preparing a lithium-ion battery, including the following step:

In a glove box filled with nitrogen or argon, where the water and oxygen contents are both at most 0.1 ppm, the lithium-ion battery electrolytes in the examples and comparative examples are filled into lithium-ion battery cells with $LiFePO_4$ or $LiNi_{0.5}Co_{0.2}Mn_{0.3}O_2$ as a cathode material and an artificial graphite as an anode; after the filling of the lithium-ion battery electrolyte is completed, sealing, standing still, formation, aging, secondary sealing and capacity division are performed to obtain the lithium-ion battery.

This example further provides methods for detecting the performance of a lithium-ion battery, including the following detection methods:

(1) Method for testing the direct current internal resistance (DCIR) of lithium-ion batteries at room temperature.

For a lithium-ion battery with $LiFePO_4$ as the cathode material, the specific steps are as follows.

At 25°C, a formed battery is constant-current and constant-voltage charged to 3.65V at 1C, with a cut-off current of 0.05C, and then constant-current discharged to 2V at 1C, and the discharge capacity Qt is recorded. Then, the battery is constant-current and constant-voltage charged to 3.65V at 1C, with a cut-off current of 0.05C, and then constant-current discharged by 50% Qt at 1C. The battery is then allowed to stand still for 1 h and the voltage $V_1$ after standing is recorded; then, the battery is constant-current discharged at a current of 5Qt for 10 s, and the voltage $V_2$ after discharge is recorded.

$$\text{Discharge DCIR} = (V_1\text{-}V_2)/(5\times Qt).$$

For a lithium-ion battery with $LiNi_{0.5}Co_{0.2}Mn_{0.3}O_2$ as the cathode material, the specific steps are as follows.

At 25°C, a formed battery is constant-current and constant-voltage charged to 4.35V at 1C, with a cut-off current of 0.05C, and then constant-current discharged to 3V at 1C, and the discharge capacity Qt is recorded. Then, the battery is constant-current and constant-voltage charged to 4.35V at 1C, with a cut-off current of 0.05C, and then constant-current discharged by 50% Qt at 1C. The battery is then allowed to stand still for 1 h and the voltage $V_3$ after standing is recorded; then, the battery is constant-current discharged at a current of 5Qt for 10 s, and the voltage $V_4$ after discharge is recorded.

$$\text{Discharge DCIR} = (V_3\text{-}V_4)/(5\times Qt).$$

(2) Method for testing the cycle performance of lithium-ion batteries.

For the lithium-ion battery with $LiFePO_4$ as the cathode material, the specific steps are as follows.

a: At 25°C, a formed battery is constant-current and constant-voltage charged to 3.65V at 1C, with a cut-off current of 0.05C, and then constant-current discharged to 2V at 1C. After 500 cycles of charge and discharge, the discharge capacity retention rate after 500 cycles is calculated.

Discharge capacity retention rate at 25°C (%) = discharge capacity after 500 cycles / discharge capacity after first cycle×100%.

b: At 0°C, a formed battery is constant-current and constant-voltage charged to 3.65V at 1C, with a cut-off current of 0.05C, and then constant-current discharged to 2V at 1C. After 80 cycles of charge and discharge, the discharge capacity retention rate after 80 cycles is calculated.

Discharge capacity retention rate at 0°C (%) = discharge capacity after 80 cycles / discharge capacity after first cycle×100%.

For the lithium-ion battery with $LiNi_{0.5}Co_{0.2}Mn_{0.3}O_2$ as the cathode material, the specific steps are as follows.

a: At 25°C, a formed battery is constant-current and constant-voltage charged to 4.35V at 1C, with a cut-off current of 0.05C, and then constant-current discharged to 3V at 1C. After 800 cycles of charge and discharge, the discharge capacity retention rate after 800 cycles is calculated.

Discharge capacity retention rate at 25°C (%) = discharge capacity after 800 cycles / discharge capacity after first cycle×100%.

b. At 45°C, a formed battery is constant-current and constant-voltage charged to 4.35V at 1C, with a cut-off current of 0.05C, and then constant-current discharged to 3V at 1C. After 400 cycles of charge and discharge, the discharge capacity retention rate after 400 cycles is calculated.

Discharge capacity retention rate at 45°C (%) = discharge capacity after 400 cycles / discharge capacity after first cycle×100%.

(3) Method for testing the high-temperature storage performance of lithium-ion batteries.

For the lithium-ion battery with $LiFePO_4$ as the cathode material, the specific steps are as follows.

At 25°C, a battery is constant-current and constant-voltage charged to 3.65V at 0.5C, with a cut-off current of

0.05C, and then constant-current discharged to 2V at 0.5C, and the discharge capacity (i.e., initial discharge capacity) is recorded. Then, the battery is constant-current and constant-voltage charged to 3.65V at 0.5C. The fully charged battery is then placed in a 60°C constant-temperature environment and stored for 7 days. 7 days later, let the battery stand still at 25°C for 4 h, and after cooling to room temperature, the battery is constant-current discharged to 2V at 0.5C, and the discharge capacity (i.e., retained capacity) is recorded. The battery is constant-current and constant-voltage charged to 3.65V at 0.5C, with a cut-off current of 0.05C, and then constant-current discharged to 2V at 0.5C, and the discharge capacity (i.e., restored capacity) is recorded.

$$\text{Battery capacity retention rate (\%)} = \text{retained capacity/initial capacity} \times 100\%.$$

Battery capacity restoration rate (%) = restored capacity/initial capacity×100%.

In the lithium-ion battery with $LiNi_{0.5}Co_{0.2}Mn_{0.3}O_2$ as the cathode material, the specific steps are as follows.

At 25°C, a battery is constant-current and constant-voltage charged to 4.35V at 0.5C, with a cut-off current of 0.05C, and then constant-current discharged to 3V at 0.5C, and the discharge capacity (i.e., initial discharge capacity) is recorded. Then, the battery is constant-current and constant-voltage charged to 4.35V at 0.5C and the initial thickness of the battery is then measured. The fully charged battery is then placed in a 60°C constant-temperature environment and stored for 7 days. 7 days later, let the battery stand still at 25°C for 4 h, and after the battery cools to room temperature, the thickness of the stored battery is measured. The battery is then constant-current discharged to 3V at 0.5C, and the discharge capacity (i.e., retained capacity) is recorded. The battery is constant-current and constant-voltage charged to 4.35V at 0.5C, with a cut-off current of 0.05C, and then constant-current discharged to 3V at 0.5C, and the discharge capacity (i.e., restored capacity) is recorded.

$$\text{Battery capacity retention rate (\%)} = \text{retained capacity/initial capacity} \times 100\%$$

Battery capacity restoration rate (%) = restored capacity/initial capacity×100%.

Thickness swelling rate (%) = (thickness after storage - initial thickness)/initial thickness×100%.

The present application is described below by specific examples.

Example 1

Provided was a preparation method for the lithium-ion battery electrolyte, including the following steps:

Step 1, in a glove box filled with nitrogen or argon, where the water and oxygen contents were both at most 0.1 ppm, ethylene carbonate, ethyl methyl carbonate and dimethyl carbonate were mixed evenly to obtain an organic solvent mixture; the volume ratio of ethylene carbonate to ethyl methyl carbonate to dimethyl carbonate was 1:1:1; then lithium hexafluorophosphate was added to the organic solvent mixture and mixed evenly to obtain a basic electrolyte, in which the concentration of lithium hexafluorophosphate was 1 mol/L;
Step 2, still in the glove box filled with nitrogen or argon, where the water and oxygen contents were both at most 0.1 ppm, the unsaturated cyclic carbonate in the additive composition and the unsaturated chain carbonate in the additive composition were added to the basic electrolyte and mixed evenly to obtain the lithium-ion battery electrolyte.

The unsaturated chain carbonate in Example 1 was the compound represented by formula (2-a), and the unsaturated cyclic carbonate was the compound represented by formula (1-a). And in the final lithium-ion battery electrolyte, the mass percent of the unsaturated chain carbonate was 1%, and the mass percent of the unsaturated cyclic carbonate was 1%.

Example 1 further provided a method for preparing a lithium-ion battery, including the following steps:
In a glove box filled with nitrogen or argon, where the water and oxygen contents were both at most 0.1 ppm, the lithium-ion battery electrolyte to be prepared was filled into a lithium-ion battery cell with $LiFePO_4$ as a cathode material and an artificial graphite as an anode. After the filling of the lithium-ion battery electrolyte was completed, sealing, standing still, formation, aging, secondary sealing and capacity division were performed to obtain the lithium-ion battery.

Example 1 further provided a method for testing the DCIR of the lithium-ion battery at room temperature, including the following steps:

At 25°C, a formed battery was constant-current and constant-voltage charged to 3.65V at 1C, with a cut-off current of 0.05C, and then constant-current discharged to 2V at 1C, and the discharge capacity Qt was recorded. Then, the battery was constant-current and constant-voltage charged to 3.65V at 1C, with a cut-off current of 0.05C, and then constant-current discharged by 50% Qt at 1C. The battery was then allowed to stand still for 1 h and the voltage $V_1$ after standing was recorded; then, the battery was constant-current discharged at a current of 5Qt for 10 s, and the voltage $V_2$ after discharge was recorded.

$$\text{Discharge DCIR} = (V_1-V_2)/(5\times Qt).$$

Examples 2-6 and Comparative Examples 1-4

Examples 2-6 and Comparative Examples 1-4 differ from Example 1 in the formulation of the additive composition in the lithium-ion battery electrolyte. The lithium-ion batteries of Examples 2-6 and Comparative Examples 1-4 all used $LiFePO_4$ as the cathode material, and the methods for testing the performance of the lithium-ion batteries in Examples 2-6 and Comparative Examples 1-4 were the same as those in Example 1.

The additive composition formulations and battery performance test results of Examples 1-6 and Comparative Examples 1-4 are shown in Table 1.

Table 1 Additive composition formulations and battery performance test results of Examples 1-6 and Comparative Examples 1-4

| Battery | Formulation of additive composition | | | | Discharge DCIR (mΩ) |
|---|---|---|---|---|---|
| | Unsaturated cyclic carbonate | | Unsaturated chain carbonate | | |
| | General formula | Content | General formula | Content | |
| Example 1 | 1-a | 1% | 2-a | 1% | 128.5 |
| Example 2 | 1-a | 1% | 2-b | 2% | 132.4 |
| Example 3 | 1-a | 2% | 2-e | 3% | 140.1 |
| Example 4 | 1-a | 1% | 2-f | 3% | 137.2 |
| Example 5 | 1-b | 1% | 2-a | 3% | 150.5 |
| Example 6 | 1-c | 2% | 2-e | 3% | 160.1 |
| Comparative Example 1 | 1-a | 1% | / | 0 | 149.1 |
| Comparative Example 2 | 1-a | 2% | / | 0 | 156.4 |
| Comparative Example 3 | 1-b | 1% | / | 0 | 169.3 |
| Comparative Example 4 | 1-c | 2% | / | 0 | 178.5 |

Example 7

Provided was a preparation method for the lithium-ion battery electrolyte, including the following steps:

Step 1, in a glove box filled with nitrogen or argon, where the water and oxygen contents were both at most 0.1 ppm, ethylene carbonate, ethyl methyl carbonate and dimethyl carbonate were mixed evenly to obtain an organic solvent mixture; the volume ratio of ethylene carbonate to ethyl methyl carbonate to dimethyl carbonate was 1:1:1; then lithium hexafluorophosphate was added to the organic solvent mixture and mixed evenly to obtain a basic electrolyte, in which the concentration of lithium hexafluorophosphate was 1 mol/L;

Step 2, still in the glove box filled with nitrogen or argon, where the water and oxygen contents were both at most 0.1 ppm, the unsaturated cyclic carbonate in the additive composition and the unsaturated chain carbonate in the additive composition were added to the basic electrolyte and mixed evenly to obtain the lithium-ion battery electrolyte.

The unsaturated chain carbonate in Example 7 was the compound represented by formula (2-b), and the unsaturated cyclic carbonate was the compound represented by formula (1-a). And in the final lithium-ion battery electrolyte, the mass percent of the unsaturated chain carbonate was 1%, and the mass percent of the unsaturated cyclic carbonate was 1%.

Example 7 further provided a method for preparing a lithium-ion battery, including the following steps:

In a glove box filled with nitrogen or argon, where the water and oxygen contents were both at most 0.1 ppm, the lithium-ion battery electrolyte to be prepared was filled into a lithium-ion battery cell with $LiNi_{0.5}Co_{0.2}Mn_{0.3}O_2$ as a cathode material and an artificial graphite as an anode. After the filling of the lithium-ion battery electrolyte was completed, sealing, standing still, formation, aging, secondary sealing and capacity division were performed to obtain the lithium-ion battery.

Example 7 further provided a method for testing the DCIR of the lithium-ion battery at room temperature, including the following steps:

At 25°C, a formed battery was constant-current and constant-voltage charged to 4.35V at 1C, with a cut-off current of 0.05C, and then constant-current discharged to 3V at 1C, and the discharge capacity Qt was recorded. Then, the battery was constant-current and constant-voltage charged to 4.35V at 1C, with a cut-off current of 0.05C, and then constant-current discharged by 50% Qt at 1C. The battery was then allowed to stand still for 1 h and the voltage $V_3$ after standing was recorded; then, the battery was constant-current discharged at a current of 5Qt for 10 s, and the voltage $V_4$ after discharge was recorded.

$$\text{Discharge DCIR} = (V_3\text{-}V_4)/(5\times Qt).$$

Examples 8-12 and Comparative Examples 5-8

Examples 8-12 and Comparative Examples 5-8 differ from Example 7 in the formulation of the additive composition in the lithium-ion battery electrolyte. The lithium-ion batteries of Examples 8-12 and Comparative Examples 5-8 all used $LiNi_{0.5}Co_{0.2}Mn_{0.3}O_2$ as the cathode material, and the methods for testing the performance of the lithium-ion batteries in Examples 8-12 and Comparative Examples 5-8 were the same as those in Example 7.

The additive composition formulations and battery performance test results of Examples 7-12 and Comparative Examples 5-8 are shown in Table 2.

Table 2 Additive composition formulations and battery performance test results of Examples 7-12 and Comparative Examples 5-8

| Battery | Formulation of additive composition | | | | Discharge DCIR (mΩ) |
|---|---|---|---|---|---|
| | Unsaturated cyclic carbonate | | Unsaturated chain carbonate | | |
| | General formula | Content | General formula | Content | |
| Example 7 | 1-a | 1% | 2-b | 1% | 98.6 |
| Example 8 | 1-a | 1% | 2-c | 1% | 89.1 |
| Example 9 | 1-b | 1% | 2-e | 3% | 109.8 |
| Example 10 | 1-b | 2% | 2-f | 1% | 128.5 |
| Example 11 | 1-b | 2% | 2-i | 1% | 139.6 |
| Example 12 | 1-c | 1% | 2-f | 0.50% | 107.6 |
| Comparative Example 5 | 1-a | 1% | / | 0 | 112.5 |
| Comparative Example 6 | 1-b | 1% | / | 0 | 134.5 |
| Comparative Example 7 | 1-b | 2% | / | 0 | 153.3 |
| Comparative Example 8 | 1-c | 1% | / | 0 | 125.6 |

From the test results of Examples 1-12 and Comparative Examples 1-8 in Table 1 and Table 2, it can be seen that the lithium-ion battery electrolytes using the additive compositions of the present application, for both batteries based on a lithium iron phosphorous oxide system and batteries based on a nickel-cobalt-manganese ternary system, have a significantly reduced discharge DCIC, as compared to the comparative examples using the first component additive alone.

Example 13

Provided was a preparation method for the lithium-ion battery electrolyte, including the following steps:

Step 1, in a glove box filled with nitrogen or argon, where the water and oxygen contents were both at most 0.1 ppm,

ethylene carbonate, ethyl methyl carbonate and dimethyl carbonate were mixed evenly to obtain an organic solvent mixture; the volume ratio of ethylene carbonate to ethyl methyl carbonate to dimethyl carbonate was 1: 1: 1, then lithium hexafluorophosphate was added to the organic solvent mixture and mixed evenly to obtain a basic electrolyte, in which the concentration of lithium hexafluorophosphate was 1 mol/L;

Step 2, still in the glove box filled with nitrogen or argon, where the water and oxygen contents were both at most 0.1 ppm, the unsaturated cyclic carbonate in the additive composition and the unsaturated chain carbonate in the additive composition were added to the basic electrolyte and mixed evenly to obtain the lithium-ion battery electrolyte.

The unsaturated chain carbonate in Example 13 was the compound represented by formula (2-b), and the unsaturated cyclic carbonate was the compound represented by formula (1-a). And in the final lithium-ion battery electrolyte, the mass percent of the unsaturated chain carbonate was 2%, and the mass percent of the unsaturated cyclic carbonate was 1%.

Example 13 further provided a method for preparing a lithium-ion battery, including the following steps:

In a glove box filled with nitrogen or argon, where the water and oxygen contents were both at most 0.1 ppm, the lithium-ion battery electrolyte to be prepared was filled into a lithium-ion battery cell with $LiFePO_4$ as a cathode material and an artificial graphite as an anode. After the filling of the lithium-ion battery electrolyte was completed, sealing, standing still, formation, aging, secondary sealing and capacity division were performed to obtain the lithium-ion battery.

Example 13 further provided a method for testing the cycle performance of the lithium-ion battery, including the following steps:

(1) At 25°C, a formed battery is constant-current and constant-voltage charged to 3.65V at 1C, with a cut-off current of 0.05C, and then constant-current discharged to 2V at 1C. After 500 cycles of charge and discharge, the discharge capacity retention rate after 500 cycles was calculated.

Discharge capacity retention rate at 25°C (%) = discharge capacity after 500 cycles / discharge capacity after first cycle×100%.

(2) At 0°C, a formed battery was constant-current and constant-voltage charged to 3.65V at 1C, with a cut-off current of 0.05C, and then constant-current discharged to 2V at 1C. After 80 cycles of charge and discharge, the discharge capacity retention rate after 80 cycles was calculated.

Discharge capacity retention rate at 0°C (%) = discharge capacity after 80 cycles / discharge capacity after first cycle×100%.

Examples 14-18 and Comparative Examples 9-12

Examples 14-18 and Comparative Examples 9-12 differ from Example 13 in the formulation of the additive composition in the lithium-ion battery electrolyte. The lithium-ion batteries of Examples 14-18 and Comparative Examples 9-12 all used $LiFePO_4$ as the cathode material, and the methods for testing the performance of the lithium-ion batteries in Examples 14-18 and Comparative Examples 9-12 were the same as those in Example 13.

The additive composition formulations and battery performance test results of Examples 13-18 and Comparative Examples 9-12 are shown in Table 3.

Table 3 Additive composition formulations and battery performance test results of Examples 13-18 and Comparative Examples 9-12

| Battery | Formulation of additive composition | | | | Cycle capacity retention rate % | |
|---|---|---|---|---|---|---|
| | Unsaturated cyclic carbonate | | Unsaturated chain carbonate | | 25 ° C (IC/IC 500 cycles) | 0° C (IC/IC 80 cycles) |
| | General formula | Content | General formula | Content | | |
| Example 13 | 1-a | 1% | 2-b | 2% | 86.5 | 81.1 |
| Example 14 | 1-a | 1% | 2-e | 2% | 88.6 | 86.2 |
| Example 15 | 1-a | 1% | 2-f | 3% | 89.2 | 92.2 |

(continued)

| Battery | Formulation of additive composition | | | | Cycle capacity retention rate % | |
|---|---|---|---|---|---|---|
| | Unsaturated cyclic carbonate | | Unsaturated chain carbonate | | 25 ° C (IC/IC 500 cycles) | 0° C (IC/IC 80 cycles) |
| | General formula | Content | General formula | Content | | |
| Example 16 | 1-a | 2% | 2-i | 3% | 91.2 | 68.4 |
| Example 17 | 1-b | 1% | 2-a | 1% | 80.2 | 75.8 |
| Example 18 | 1-c | 1% | 2-f | 3% | 83.6 | 88.2 |
| Comparative Example 9 | 1-a | 1% | / | 0 | 81.6 | 55.6 |
| Comparative Example 10 | 1-a | 2% | / | 0 | 86.5 | 28.5 |
| Comparative Example 11 | 1-b | 1% | / | 0 | 72.9 | 40.9 |
| Comparative Example 12 | 1-c | 1% | / | 0 | 76.1 | 50.1 |

Example 19

Provided was a preparation method for the lithium-ion battery electrolyte, including the following steps:

Step 1, in a glove box filled with nitrogen or argon, where the water and oxygen contents were both at most 0.1 ppm, ethylene carbonate, ethyl methyl carbonate and dimethyl carbonate were mixed evenly to obtain an organic solvent mixture; the volume ratio of ethylene carbonate to ethyl methyl carbonate to dimethyl carbonate was 1:1:1; then lithium hexafluorophosphate was added to the organic solvent mixture and mixed evenly to obtain a basic electrolyte, in which the concentration of lithium hexafluorophosphate was 1 mol/L;
Step 2, still in the glove box filled with nitrogen or argon, where the water and oxygen contents were both at most 0.1 ppm, the unsaturated cyclic carbonate in the additive composition and the unsaturated chain carbonate in the additive composition were added to the basic electrolyte and mixed evenly to obtain the lithium-ion battery electrolyte.

The unsaturated chain carbonate in Example 19 was the compound represented by formula (2-a), and the unsaturated cyclic carbonate was the compound represented by formula (1-a). And in the final lithium-ion battery electrolyte, the mass percent of the unsaturated chain carbonate was 0.5%, and the mass percent of the unsaturated cyclic carbonate was 1%.
Example 19 further provided a method for preparing a lithium-ion battery, including the following steps:
In a glove box filled with nitrogen or argon, where the water and oxygen contents were both at most 0.1 ppm, the lithium-ion battery electrolyte to be prepared was filled into a lithium-ion battery cell with $LiNi_{0.5}Co_{0.2}Mn_{0.3}O_2$ as a cathode material and an artificial graphite as an anode. After the filling of the lithium-ion battery electrolyte was completed, sealing, standing still, formation, aging, secondary sealing and capacity division were performed to obtain the lithium-ion battery.
Example 19 further provided a method for testing the cycle performance of lithium-ion batteries, including the following steps:

(1) At 25°C, a formed battery was constant-current and constant-voltage charged to 4.35V at 1C, with a cut-off current of 0.05C, and then constant-current discharged to 3V at 1C. After 800 cycles of charge and discharge, the discharge capacity retention rate after 800 cycles was calculated.

Discharge capacity retention rate at 25°C (%) = discharge capacity after 800 cycles / discharge capacity after first cycle×100%.

(2) At 45°C, a formed battery was constant-current and constant-voltage charged to 4.35V at 1C, with a cut-off current of 0.05C, and then constant-current discharged to 3V at 1C. After 400 cycles of charge and discharge, the discharge capacity retention rate after 400 cycles was calculated.

Discharge capacity retention rate at 45°C (%) = discharge capacity after 400 cycles / discharge capacity after first cycle×100%.

Examples 20-24 and Comparative Examples 13-16

Examples 20-24 and Comparative Examples 13-16 differ from Example 19 in the formulation of the additive composition in the lithium-ion battery electrolyte. The lithium-ion batteries of Examples 20-24 and Comparative Examples 13-16 all used $LiNi_{0.5}Co_{0.2}Mn_{0.3}O_2$ as the cathode material, and the methods for testing the performance of the lithium-ion batteries in Examples 20-24 and Comparative Examples 13-16 were the same as those in Example 19.

The additive composition formulations and battery performance test results of Examples 19-24 and Comparative Examples 13-16 are shown in Table 4.

Table 4 Additive composition formulations and battery performance test results of Examples 19-24 and Comparative Examples 13-16

| Battery | Formulation of additive composition | | | | Cycle capacity retention rate % | |
|---|---|---|---|---|---|---|
| | Unsaturated cyclic carbonate | | Unsaturated chain carbonate | | 25 ° C (IC/IC 800 cycles) | 45 ° C (1C/1C 400 cycles) |
| | General formula | Content | General formula | Content | | |
| Example 19 | 1-a | 1% | 2-a | 0.5% | 90.2 | 89.6 |
| Example 20 | 1-a | 1% | 2-c | 1% | 91.5 | 90.6 |
| Example 21 | 1-b | 1% | 2-a | 1% | 88.1 | 86.5 |
| Example 22 | 1-b | 1% | 2-e | 3% | 89.4 | 88.6 |
| Example 23 | 1-b | 2% | 2-f | 1% | 85.1 | 83.6 |
| Example 24 | 1-c | 1% | 2-e | 0.5% | 87.6 | 84.3 |
| Comparative Example 13 | 1-a | 1% | / | 0 | 85.2 | 83.6 |
| Comparative Example 14 | 1-b | 1% | / | 0 | 82.3 | 78.6 |
| Comparative Example 15 | 1-b | 2% | / | 0 | 79.2 | 75.3 |
| Comparative Example 16 | 1-c | 1% | / | 0 | 83.5 | 79.6 |

From the test results of Examples 13-24 and Comparative Examples 9-16 in Table 3 and Table 4, it can be seen that the batteries including the lithium-ion battery electrolytes using the additive compositions of the present application have a higher room-temperature capacity retention rate, as compared to the comparative examples, regardless of the batteries based on a lithium iron phosphorous oxide system and batteries based on a nickel-cobalt-manganese ternary system. In batteries based on the lithium iron phosphorous oxide system, the electrolytes using the additive compositions of the present application have a significantly improved low-temperature capacity retention rate, as compared with comparative examples. In batteries based on the nickel-cobalt-manganese ternary system, the electrolytes using the additive compositions of the present application also have a significantly improved high-temperature capacity retention rate.

Example 25

Provided was a preparation method for the lithium-ion batteryelectrolyte, including the following steps:

Step 1, in a glove box filled with nitrogen or argon, where the water and oxygen contents were both at most 0.1 ppm, ethylene carbonate, ethyl methyl carbonate and dimethyl carbonate were mixed evenly to obtain an organic solvent mixture; the volume ratio of ethylene carbonate to ethyl methyl carbonate to dimethyl carbonate was 1:1:1, then lithium hexafluorophosphate was added to the organic solvent mixture and mixed evenly to obtain a basic electrolyte, in which the concentration of lithium hexafluorophosphate was 1 mol/L;

Step 2, still in the glove box filled with nitrogen or argon, where the water and oxygen contents were both at most 0.1 ppm, the unsaturated cyclic carbonate in the additive composition and the unsaturated chain carbonate in the additive composition were added to the basic electrolyte and mixed evenly to obtain the lithium-ion batteryelectrolyte.

The unsaturated chain carbonate in Example 25 was the compound represented by formula (2-a), and the

unsaturated cyclic carbonate was the compound represented by formula (1-a). And in the final lithium-ion battery electrolyte, the mass percent of the unsaturated chain carbonate was 1%, and the mass percent of the unsaturated cyclic carbonate was 1%.

Example 25 further provided a method for preparing a lithium-ion battery, including the following steps:

In a glove box filled with nitrogen or argon, where the water and oxygen contents were both at most 0.1 ppm, the lithium-ion battery electrolyte to be prepared was filled into a lithium-ion battery cell with $LiFePO_4$ as a cathode material and an artificial graphite as an anode. After the filling of the lithium-ion battery electrolyte was completed, sealing, standing still, formation, aging, secondary sealing and capacity division were performed to obtain the lithium-ion battery.

Example 25 further provided a method for testing the high-temperature storage performance of the lithium-ion battery, including the following steps:

At 25°C, a battery is constant-current and constant-voltage charged to 3.65V at 0.5C, with a cut-off current of 0.05C, and then constant-current discharged to 2V at 0.5C, and the discharge capacity (i.e., initial discharge capacity) is recorded. Then, the battery was constant-current and constant-voltage charged to 3.65V at 0.5C. The fully charged battery was then placed in a 60°C constant-temperature environment and stored for 7 days. 7 days later, the battery was allowed to stand still at 25°C for 4 h, and after cooling to room temperature, the battery was constant-current discharged to 2V at 0.5C, and the discharge capacity (i.e., retained capacity) was recorded. The battery was constant-current and constant-voltage charged to 3.65V at 0.5C, with a cut-off current of 0.05C, and then constant-current discharged to 2V at 0.5C, and the discharge capacity (i.e., restored capacity) was recorded.

Battery capacity retention rate (%) = retained capacity/initial capacity×100%.

Battery capacity restoration rate (%) = restored capacity/initial capacity×100%.

Examples 26-30 and Comparative Examples 17-20

Examples 26-30 and Comparative Examples 17-20 differ from Example 25 in the formulation of the additive composition in the lithium-ion battery electrolyte. The lithium-ion batteries of Examples 26-30 and Comparative Examples 17-20 all used $LiFePO_4$ as the cathode material, and the methods for testing the performance of the lithium-ion batteries in Examples 26-30 and Comparative Examples 17-20 were the same as those in Example 25.

The additive composition formulations and battery performance test results of Examples 25-30 and Comparative Examples 17-20 are shown in Table 5.

Table 5 Additive composition formulations and battery performance test results of Examples 25-30 and Comparative Examples 17-20

| Battery | Formulation of additive composition | | | | High-temperature storage performance (60° C 7 days) | |
|---|---|---|---|---|---|---|
| | Unsaturated cyclic carbonate | | Unsaturated chain carbonate | | Capacity retention rate, % | Capacity restoration rate, % |
| | General formula | Content | General formula | Content | | |
| Example 25 | 1-a | 1% | 2-a | 1% | 91.6 | 93.9 |
| Example 26 | 1-a | 1% | 2-b | 2% | 92.0 | 94.2 |
| Example 27 | 1-a | 2% | 2-f | 3% | 93.9 | 95.4 |
| Example 28 | 1-a | 2% | 2-i | 3% | 94.3 | 95.9 |
| Example 29 | 1-b | 1% | 2-e | 2% | 95.8 | 97.3 |
| Example 30 | 1-c | 2% | 2-i | 3% | 92.0 | 93.9 |
| Comparative Example 17 | 1-a | 1% | / | 0 | 88.2 | 90.2 |
| Comparative Example 18 | 1-a | 2% | / | 0 | 89.3 | 91.8 |
| Comparative Example 19 | 1-b | 1% | / | 0 | 90.1 | 92.9 |
| Comparative Example 20 | 1-C | 2% | / | 0 | 88.2 | 90.4 |

Example 31

Provided was a preparation method for the lithium-ion battery electrolyte, including the following steps:

Step 1, in a glove box filled with nitrogen or argon, where the water and oxygen contents were both at most 0.1 ppm, ethylene carbonate, ethyl methyl carbonate and dimethyl carbonate were mixed evenly to obtain an organic solvent mixture; the volume ratio of ethylene carbonate to ethyl methyl carbonate to dimethyl carbonate was 1:1:1; then lithium hexafluorophosphate was added to the organic solvent mixture and mixed evenly to obtain a basic electrolyte, in which the concentration of lithium hexafluorophosphate was 1 mol/L;
Step 2, still in the glove box filled with nitrogen or argon, where the water and oxygen contents were both at most 0.1 ppm, the unsaturated cyclic carbonate in the additive composition and the unsaturated chain carbonate in the additive composition were added to the basic electrolyte and mixed evenly to obtain the lithium-ion battery electrolyte.

The unsaturated chain carbonate in Example 31 was the compound represented by formula (2-b), and the unsaturated cyclic carbonate was the compound represented by formula (1-a). And in the final lithium-ion battery electrolyte, the mass percent of the unsaturated chain carbonate was 1%, and the mass percent of the unsaturated cyclic carbonate was 1%.
Example 31 further provided a method for preparing a lithium-ion battery, including the following steps:
In a glove box filled with nitrogen or argon, where the water and oxygen contents were both at most 0.1 ppm, the lithium-ion battery electrolyte to be prepared was filled into a lithium-ion battery cell with $LiNi_{0.5}Co_{0.2}Mn_{0.3}O_2$ as a cathode material and artificial graphite as an anode. After the filling of the lithium-ion battery electrolyte was completed, sealing, standing still, formation, aging, secondary sealing and capacity division were performed to obtain the lithium-ion battery.
Example 31 further provided a method for testing the high-temperature storage performance of the lithium-ion battery, including the following steps:
At 25°C, a battery was constant-current and constant-voltage charged to 4.35V at 0.5C, with a cut-off current of 0.05C, and then constant-current discharged to 3V at 0.5C, and the discharge capacity (i.e., initial discharge capacity) was recorded. Then, the battery was constant-current and constant-voltage charged to 4.35V at 0.5C and the initial thickness of the battery was then measured. The fully charged battery was then placed in a 60°C constant-temperature environment and stored for 7 days. 7 days later, the battery was allowed to stand still at 25°C for 4 h, and after the battery cooled to room temperature, the thickness of the stored battery was measured. The battery was then constant-current discharged to 3V at 0.5C, and the discharge capacity (i.e., retained capacity) was recorded. The battery was constant-current and constant-voltage charged to 4.35V at 0.5C, with a cut-off current of 0.05C, and then constant-current discharged to 3V at 0.5C, and the discharge capacity (i.e., restored capacity) was recorded.

Battery capacity retention rate (%) = retained capacity/initial capacity$\times$100%.

Battery capacity restoration rate (%) = restored capacity/initial capacity$\times$100%.

Thickness swelling rate (%) = (thickness after storage - initial thickness)/initial thickness$\times$100%.

Examples 32-36 and Comparative Examples 21-24

Examples 32-36 and Comparative Examples 21-24 differ from Example 31 in the formulation of the additive composition in the lithium-ion battery electrolyte. The lithium-ion batteries of Examples 32-36 and Comparative Examples 21-24 all used $LiNi_{0.5}Co_{0.2}Mn_{0.3}O_2$ as a cathode material, and the methods for testing the performance of the lithium-ion batteries in Examples 32-36 and Comparative Examples 21-24 were the same as those in Example 31.
The additive composition formulations and battery performance test results of Examples 31-36 and Comparative Examples 21-24 are shown in Table 6.

Table 6 Additive composition formulations and battery performance test results of Examples 31-36 and Comparative Examples 21-24

| Battery | Formulation of additive composition | | | | High-temperature storage performance (60° C 7 days) | | |
|---|---|---|---|---|---|---|---|
| | Unsaturated cyclic carbonate | | Unsaturated chain carbonate | | | | |
| | General formula | Content | General formula | Content | Capacity retention rate, % | Capacity restoration rate, % | Thickness swelling rate, % |
| Example 31 | 1-a | 1% | 2-b | 1% | 84.6 | 89.6 | 5.5 |
| Example 32 | 1-a | 1% | 2-c | 1% | 84.9 | 90.9 | 4.9 |
| Example 33 | 1-b | 1% | 2-a | 3% | 89.2 | 94.8 | 2.9 |
| Example 34 | 1-b | 2% | 2-c | 1% | 90.6 | 97.5 | 2.6 |
| Example 35 | 1-b | 2% | 2-f | 1% | 90.1 | 96.3 | 3.1 |
| Example 36 | 1-c | 2% | 2-e | 3% | 88.6 | 94.5 | 3.9 |
| Comparative Example 21 | 1-a | 1% | / | 0 | 75.0 | 82.1 | 10.5 |
| Comparative Example 22 | 1-b | 1% | / | 0 | 79.2 | 86.2 | 7.6 |
| Comparative Example 23 | 1-b | 2% | / | 0 | 83.7 | 92.1 | 5.2 |
| Comparative Example 24 | 1-c | 2% | / | 0 | 82.l | 90.8 | 6.3 |

From the test results of Examples 25-36 and Comparative Examples 17-24 in Table 5 and Table 6, it can be seen that the capacity retention rate and capacity restoration rate after high-temperature storage in the comparative examples were at normal levels, while for the batteries including the lithium-ion battery electrolytes using the additive compositions of the present application, the high-temperature storage performance can be improved and the battery swelling after high-temperature storage is also inhibited, regardless of whether the cathode materials of the batteries are lithium iron phosphorus oxide or the nickel-cobalt-manganese ternary system.

In summary, the present application uses a mixture of the unsaturated cyclic carbonate and the unsaturated chain carbonate as the additive composition for use in the lithium-ion battery electrolyte. With suitable ratios, the lithium-ion batteries with low impedance, excellent cycle performance, especially low-temperature cycle performance, are obtained; the gas generation caused by the decomposition of the electrolyte can be inhibited, and the high-temperature cycle and high-temperature storage performance of the batteries are improved.

The specific examples are merely an explanation of the present application and not for limiting the present application. Those skilled in the art may make modifications, without creative contribution, to the examples as needed after reading this specification. Any of the modifications made within the scope of the claims of the present application shall be protected by the Patent Law.

## Claims

1. An additive composition for a lithium-ion battery electrolyte, **characterized by** comprising an unsaturated cyclic carbonate and an unsaturated chain carbonate; wherein

    the unsaturated cyclic carbonate comprises at least one of the following compounds:

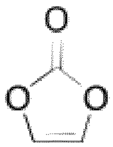

formula (1-a)

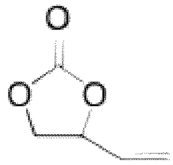

formula (1-b)

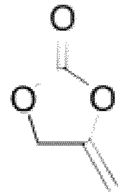

formula (1-c)

the unsaturated chain carbonate has the following general structural formula:

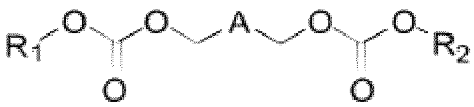

general formula (2)

wherein $R_1$ is a hydrocarbyl or fluorinated hydrocarbyl containing 1 to 6 carbon atoms, and $R_2$ is a hydrocarbyl or fluorinated hydrocarbyl containing 1 to 6 carbon atoms; and group A is a vinylidene or an ethynylene.

2. The additive composition for the lithium-ion battery electrolyte according to claim 1, **characterized in that**, the unsaturated chain carbonate is at least one of the following compounds:

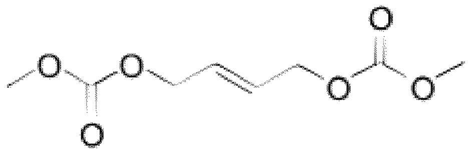

formula (2-a)

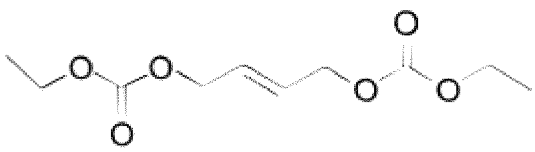

formula (2-b)

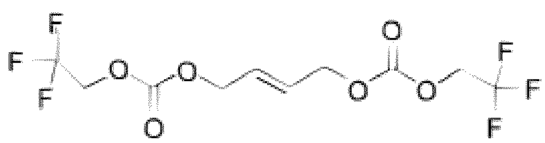

formula (2-c)

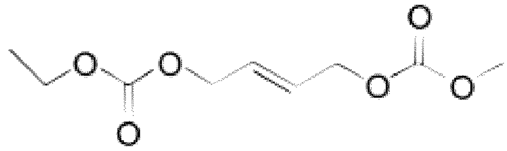

formula (2-d)

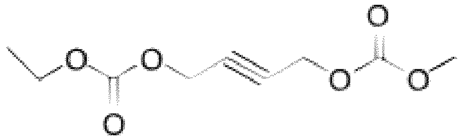

formula (2-e)

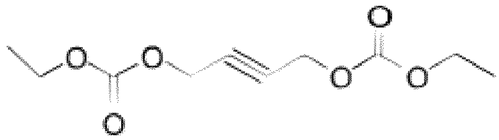

formula (2-f)

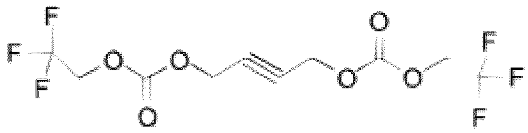

formula (2-g)

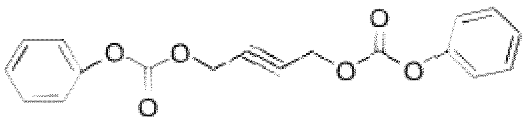

formula (2-h)

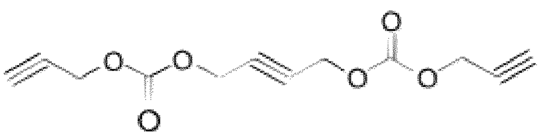

formula (2-i)

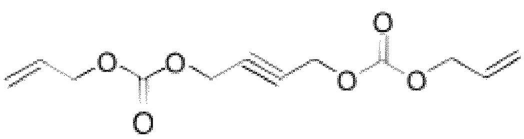

and

formula (2-j).

3. The additive composition for the lithium-ion battery electrolyte according to claim 1, **characterized in that**, a mass ratio of the unsaturated cyclic carbonate to the unsaturated chain carbonate is (0.5-5): (0.05-10).

4. A lithium-ion battery electrolyte, **characterized by** comprising a lithium salt electrolyte, an organic solvent and the additive composition according to any one of claims 1 to 3.

5. The lithium-ion battery electrolyte according to claim 4, **characterized in that**, a mass percent of the unsaturated cyclic carbonate in the additive composition is 0.5%-5% in the lithium-ion battery electrolyte, and a mass percent of the unsaturated chain carbonate in the additive composition is 0.05%-10% in the lithium-ion battery electrolyte.

6. The lithium-ion battery electrolyte according to claim 4, **characterized in that**, the organic solvent is at least one selected from a group consisting of: dimethyl carbonate, diethyl carbonate, dipropyl carbonate, ethylene carbonate, ethyl methyl carbonate, methyl propyl carbonate, methyl butyl carbonate, propylene carbonate, γ-butyrolactone, methyl acetate, ethyl acetate, propyl acetate, butyl acetate, methyl propionate, ethyl propionate, propyl propionate, methyl butyrate, ethyl butyrate, difluoroethyl acetate, trifluoroethyl acetate, trifluoroethyl methyl carbonate, and bistrifluoroethyl carbonate.

7. The lithium-ion battery electrolyte according to claim 4, **characterized in that**, the lithium salt electrolyte is at least one selected from a group consisting of: lithium hexafluorophosphate, lithium tetrafluoroborate, lithium difluorophosphate, lithium perchlorate, lithium hexafluoroarsenate, lithium bis(fluorosulfonyl)imide, lithium bis(trifluoromethylsulfonyl)imide, lithium bis(oxalate)borate, lithium difluorooxalateborate, lithium tetrafluorooxalatephosphate, lithium difluorobis(oxalate)phosphate, and lithium fluorosulfonyl(trifluoromethylsulfonyl)imide; wherein a molar concentration of the lithium salt electrolyte in the lithium-ion battery electrolyte is 0.5-2 mol/L.

8. Use of the lithium-ion battery electrolyte according to any one of claims 4 to 7, **characterized in that**, the lithium-ion battery electrolyte is used in lithium-ion batteries with lithium iron phosphorus oxide, lithium manganese oxide, lithium cobalt oxide, lithium nickel cobalt manganese oxide, lithium nickel cobalt aluminum oxide, lithium nickel cobalt manganese aluminum oxide and lithium manganese iron phosphorus oxide as cathodes.

9. The use according to claim 8, **characterized in that**, the lithium-ion battery electrolyte is used in lithium-ion batteries with carbon materials or silicon-based materials as anodes.

# INTERNATIONAL SEARCH REPORT

International application No.
**PCT/CN2023/108148**

## A. CLASSIFICATION OF SUBJECT MATTER

H01M10/0567(2010.01)i；H01M10/0525(2010.01)i

According to International Patent Classification (IPC) or to both national classification and IPC

## B. FIELDS SEARCHED

Minimum documentation searched (classification system followed by classification symbols)

IPC：H01M10/-

Documentation searched other than minimum documentation to the extent that such documents are included in the fields searched

Electronic data base consulted during the international search (name of data base and, where practicable, search terms used)

CNTXT, ENTXTC, VEN, WPABSC, STN: 不饱和环状碳酸酯, 不饱和链状碳酸酯, 锂离子电池, 电解液, 碳酸亚乙烯酯, 乙烯基碳酸乙烯酯, 氟代碳酸亚乙烯酯, 碳酸烯丙基甲酯, 烯丙基乙基碳酸酯, 碳酸二烯丙酯, electrolyte, lithium ion battery, unsaturated, cyclic carbonate, chain carbonate

## C. DOCUMENTS CONSIDERED TO BE RELEVANT

| Category* | Citation of document, with indication, where appropriate, of the relevant passages | Relevant to claim No. |
|---|---|---|
| PX | CN 115799638 A (SUZHOU QITIAN NEW MATERIAL CO., LTD.) 14 March 2023 (2023-03-14)<br>claims 1-8 | 1-9 |
| Y | JP 2011258548 A (MITSUBISHI CHEMICAL CORP.) 22 December 2011 (2011-12-22)<br>description, paragraphs 130-159 | 1-9 |
| Y | JP 2002100402 A (DENSO CORP. et al.) 05 April 2002 (2002-04-05)<br>description, paragraphs 7-20 | 1-9 |
| Y | JP 2012178340 A (MITSUBISHI CHEMICAL CORP.) 13 September 2012 (2012-09-13)<br>description, paragraphs 62-64 | 1, 3-9 |
| A | CN 105140564 A (DONGGUAN KAIXIN BATTERY MATERIAL CO., LTD.) 09 December 2015 (2015-12-09)<br>entire description | 1-9 |
| A | CN 111029653 A (DONGGUAN SHANSHAN BATTERY MATERIALS CO., LTD. et al.) 17 April 2020 (2020-04-17)<br>entire description | 1-9 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **2023年10月16日** | **30 October 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | <br>Telephone No. |

Form PCT/ISA/210 (second sheet) (July 2022)

**INTERNATIONAL SEARCH REPORT**

International application No.
**PCT/CN2023/108148**

**C. DOCUMENTS CONSIDERED TO BE RELEVANT**

| Category* | Citation of document, with indication, where appropriate, of the relevant passages | Relevant to claim No. |
|---|---|---|
| A | JP 2012054231 A (MITSUBISHI CHEMICAL CORP.) 15 March 2012 (2012-03-15) entire description | 1-9 |

Form PCT/ISA/210 (second sheet) (July 2022)

**INTERNATIONAL SEARCH REPORT**
**Information on patent family members**

International application No.
**PCT/CN2023/108148**

| Patent document cited in search report | Publication date (day/month/year) | Patent family member(s) | Publication date (day/month/year) |
|---|---|---|---|
| CN 115799638 A | 14 March 2023 | None | |
| JP 2011258548 A | 22 December 2011 | JP 5760665 B2 | 12 August 2015 |
| JP 2002100402 A | 05 April 2002 | JP 4827287 B2 | 30 November 2011 |
| JP 2012178340 A | 13 September 2012 | JP 5906761 B2 | 20 April 2016 |
| CN 105140564 A | 09 December 2015 | None | |
| CN 111029653 A | 17 April 2020 | None | |
| JP 2012054231 A | 15 March 2012 | JP 5948756 B2 | 06 July 2016 |

Form PCT/ISA/210 (patent family annex) (July 2022)